# EUROPEAN PATENT APPLICATION

(11) **EP 3 553 140 A1**
(43) Date of publication of application: **16.10.2019**
(21) Application number: 17878757.8
(22) Date of filing: 07.12.2017
(51) Int. Cl.: C09D 11/36, B41J 2/01, B41M 5/00, C09D 11/322

(54) **NON-AQUEOUS INKJET INK COMPOSITION**

(30) Priority: 09.12.2016 JP 2016239116
(71) Applicant: Sakata INX Corporation, Osaka-shi, Osaka 550-0002 (JP)
(72) Inventor: AOKI Yoshiyuki, Osaka-shi Osaka 550-0002 (JP); NAKASHIMA Okinori, Osaka-shi Osaka 550-0002 (JP); KINJYO Jun, Osaka-shi Osaka 550-0002 (JP); MIYAKE Ryohei, Osaka-shi Osaka 550-0002 (JP)
(74) Representative: Grünecker Patent- und Rechtsanwälte PartG mbB
(86) International application number: PCT/JP2017/044024
(87) International publication number: WO 2018/105696

(57) **Abstract**

An object is to provide a nonaqueous inkjet ink composition that exhibits excellent fine print reproducibility, solid fill property, and anti-mottling property, as well as superior discharge stability and resolubility of dried coating film, on printing targets whose printing surface is constituted by polyvinyl chloride, ethylene-vinyl acetate copolymer, or other vinyl polymer, etc., even under high-speed printing. As a solution, a nonaqueous inkjet ink composition containing a pigment, pigment dispersant, and an organic solvent, is provided, wherein the organic solvent contains a diethylene glycol alkyl ether acetate and a diethylene glycol dialkyl ether; the total content of the diethylene glycol alkyl ether acetate and diethylene glycol dialkyl ether accounts for 40 to 80 parts by mass in the nonaqueous inkjet ink composition representing 100 parts by mass; and the diethylene glycol alkyl ether acetate is compounded in relation to the diethylene glycol dialkyl ether in a manner satisfying that a ratio of diethylene glycol alkyl ether acetate/diethylene glycol dialkyl ether is 0.25 to 4.5.

## Description

### Technical Field

The present invention relates to a nonaqueous inkjet ink composition suitable for use in the manufacture of large-size billboard ads, etc., whose printing surface is primarily constituted by a vinyl chloride polymer or ethylene-vinyl acetate copolymer.

### Background Art

Nowadays, a growing number of billboard ads are featuring photographic images of products and people's faces, in addition to logos and patterns of vivid colors and sophisticated designs. In addition, many billboard ads are produced in large sizes to give stronger impact on the viewers. In general, traditional ways to produce billboard ads have been to cut out letters from colored sheets and attach the cutout letters to create logos, or to utilize various printing presses to create photographic images. These methods present problems in that they are time-consuming and labor-intensive and require large equipment such as printing presses.

Accordingly, attempts are made to simplify the production of billboards featuring vivid images by utilizing an inkjet method that permits designs created on a personal computer to be printed directly on base materials.

One feature of the inkjet method is that it supports a wide range of base materials to be printed on, making printing on paper, polymer, metal, and other hard and soft sheet materials not only possible, but effortless. For billboard ads that are installed outdoors and must therefore be lightweight, exceptionally strong and durable, resistant to rain, and also affordable, the inkjet method that permits easy printing on polymer sheets offering these exact properties presents a significant advantage.

In addition, super-wide-format inkjet printers accommodating printing widths of 2,000 mm or more have emerged of late, making the production of billboards even easier by allowing large printed matters to be produced in a single step instead of attaching smaller pieces together as the traditional method requires.

In general, tarpaulin is a common material of polymer sheets used for billboard ads. It should be noted that tarpaulin is a composite sheet using polyester or polyamide as a core material, on top and bottom of which a polyvinyl chloride, ethylene-vinyl acetate copolymer, or other vinyl polymer is laminated.

For inkjet ink compositions to print on these composite sheets, nonaqueous inkjet ink compositions based on organic solvents (environmentally-friendly organic solvents in recent years) are used. Nonaqueous inkjet ink compositions must use materials having good wettability, drying property, fixing property, etc., on polyvinyl chlorides, ethylene-vinyl acetate copolymers, and other vinyl polymers that are used as surface materials for compositive sheets.

Known ways to achieve this include: using alkylene glycol monoether monoester and cyclic ester as an organic solvent (refer to Patent Literature 1); using an organic solvent that contains a specific quantity of vinyl polymer as a binder resin and a specific quantity of environmentally-friendly polyalkylene glycol dialkyl ether as an organic solvent (refer to Patent Literature 2); using an organic solvent that contains specific quantities of diethylene glycol ethyl methyl ether and propylene carbonate (refer to Patent Literature 3); and an inkjet ink containing diethylene glycol diethyl ether and ethylene glycol monobutyl ether acetate (refer to Patent Literature 4).

In recent years, however, a demand for higher printing speeds is causing characters to bleed or run together in small fonts printed with traditional nonaqueous inkjet ink compositions (especially nonaqueous inkjet ink compositions using environmentally-friendly organic solvents), while the longer use of printers is creating maintenance problems such as clogged waste ink tubes, etc., caused by accumulation of dried ink deposits on the printer components requiring maintenance.

### Background Art Literature

### Patent Literature

Patent Literature 1: Japanese Patent Laid-open No. 2005-200469
Patent Literature 2: International Patent Laid-open No. 2007/072804
Patent Literature 3: International Patent Laid-open No. 2015/020128
Patent Literature 2: Japanese Patent Laid-open No. 2012-162002

### Summary of the Invention

### Problems to Be Solved by the Invention

The present invention aims to provide a nonaqueous inkjet ink composition that exhibits excellent fine print reproducibility, solid fill property, and anti-mottling property, as well as superior discharge stability and resolubility of dried coating film, on printing targets whose printing surface is constituted by a polyvinyl chloride, ethylene-vinyl acetate copolymer, or other vinyl polymer, etc., even under high-speed printing.

### Means for Solving the Problems

As a result of studying in earnest to solve the aforementioned problems, the inventors of the present invention found that use of an organic solvent containing specific quantities of diethylene glycol alkyl ether acetate and diethylene glycol dialkyl ether would solve the aforementioned problems, and eventually developed the present invention.

To be specific, the present invention is as follows.
(1) A nonaqueous inkjet ink composition containing a pigment, a pigment dispersant, and an organic solvent, wherein the organic solvent contains a diethylene glycol alkyl ether acetate and a diethylene glycol dialkyl ether; the total content of the diethylene glycol alkyl ether acetate and diethylene glycol dialkyl ether accounts for 40 to 80 parts by mass in the nonaqueous inkjet ink composition representing 100 parts by mass; and the diethylene glycol alkyl ether acetate is compounded in relation to the diethylene glycol dialkyl ether in a manner satisfying that a ratio of diethylene glycol alkyl ether acetate/diethylene glycol dialkyl ether is 0.25 to 4.5.
(2) A nonaqueous inkjet ink composition according to (1), wherein the diethylene glycol alkyl ether acetate is a diethylene glycol monoethyl ether acetate.
(3) A nonaqueous inkjet ink composition according to (1) or (2), wherein the diethylene glycol dialkyl ether is a diethylene glycol ethyl methyl ether and/or diethylene glycol diethyl ether.
(4) A nonaqueous inkjet ink composition according to any one of (1) to (3), wherein the organic solvent further contains a cyclic ester compound by 10 to 30 parts by mass in the nonaqueous inkjet ink composition representing 100 parts by mass.
(5) A nonaqueous inkjet ink composition according to (4), wherein the cyclic ester compound is γ-butyrolactone.

### Effects of the Invention

The nonaqueous inkjet ink composition proposed by the present invention contains a pigment, a pigment dispersant, and an organic solvent containing specific quantities of diethylene glycol alkyl ether acetate and diethylene glycol dialkyl ether.

This way, the effects of the ink composition, such as being low in viscosity, having good fine print reproducibility, solid fill property, and anti-mottling property, as well as good stability of discharge from inkjet nozzles and resolubility of dried coating film, can be demonstrated.

### Mode for Carrying Out the Invention

### (Pigment)

For the pigment constituting the nonaqueous inkjet ink composition proposed by the present invention, any known inorganic pigment, organic pigment, etc., traditionally used in nonaqueous inkjet ink compositions may be used.

Specific examples of traditionally-known inorganic pigments include carbon black, titanium oxide, zinc flower, zinc oxide, lithopone, iron oxide, aluminum oxide, silicon dioxide, kaolinite, montmorillonite, talc, barium sulfate, calcium carbonate, silica, alumina, cadmium red, red oxide, molybdenum red, chrome vermilion, molybdate orange, yellow lead, chrome yellow, cadmium yellow, yellow iron oxide, titanium yellow, chromium oxide, viridian, cobalt green, titanium cobalt green, cobalt chrome green, sea blue, ultramarine blue, Prussian blue, cobalt blue, cerulean blue, manganese violet, cobalt violet, mica, etc.

Specific examples of organic pigments include azo, azomethine, polyazo, phthalocyanine, quinacridone, anthraquinone, indigo, thioindigo, quinophthalone, benzimidazolone, isoindoline, isoindolinone, and other organic pigments, where specific examples in terms of color index designation include pigment black 7, pigment blue 15, 15:1, 15:3, 15:4, 15:6, 60, pigment green 7, 36, pigment red 9, 48, 49, 52, 53, 57, 97, 122, 149, 168, 177, 178, 179, 206, 207, 209, 242, 254, 255, pigment violet 19, 23, 29, 30, 37, 40, 50, pigment yellow 12, 13, 14, 17, 20, 24, 74, 83, 86, 93, 94, 95, 109, 110, 117, 120, 125, 128, 137, 138, 139, 147, 148, 150,151, 154, 155, 166, 168, 180, 185, pigment orange 36, 43, 51, 55, 59, 61, 71, 74, etc.

Any of these pigments may be used alone, or two or more types may be mixed, where the pigment use quantity is 1.0 to 10.0 percent by mass, or more preferably 2.0 to 7.0 percent by mass, relative to the total quantity of nonaqueous inkjet ink composition. If the pigment use quantity is less than 1.0 percent by mass, the coloring power tends to become insufficient, while a use quantity exceeding 10.0 percent by mass increases viscosity, and fluidity of the ink tends to drop.

### (Pigment Dispersant)

Next, for the pigment dispersant constituting the nonaqueous inkjet ink composition proposed by the present invention, any ionic or nonionic surface-active agent, anionic, cationic, or nonionic polymer compound, and the like, may be used.

Among these, a pigment dispersant based on polymer compound is preferred, where preferred examples include the carbodiimide compounds described in Japanese Patent Laid-open No. 2004-083872, International Patent Laid-open No. 2003/076527, and International Patent Laid-open No. 2004/000950, AJISPER (manufactured by Ajinomoto Fine-Techno), SOLSPERSE (manufactured by Lubrizol), DISPERBYK (manufactured by BYK Chemie), EFKA (manufactured by BASF), etc. Any of these pigment dispersants may be used alone, or two or more types may be mixed.

It should be noted that the aforementioned pigment dispersants to be used may be selected as deemed appropriate according to the pigment type and the type of the organic solvent used.

### (Organic Solvent)

The organic solvent that constitutes the nonaqueous inkjet ink composition proposed by the present invention is one that uses a diethylene glycol alkyl ether acetate and a diethylene glycol dialkyl ether, by 40 to 80 parts by mass in the nonaqueous inkjet ink composition representing 100 parts by mass. Within this range, the lower limit of use quantity of the diethylene glycol alkyl ether acetate and diethylene glycol dialkyl ether is set to preferably 50 parts by mass or more, or more preferably 55 parts by mass or more. Also, within this range, the upper limit of use quantity of the diethylene glycol alkyl ether acetate and diethylene glycol dialkyl ether is set to preferably 70 parts by mass or less, or more preferably 65 parts by mass or less.

Furthermore, the diethylene glycol alkyl ether acetate is required to be used in relation to the diethylene glycol dialkyl ether in a manner satisfying that a ratio of diethylene glycol alkyl ether acetate/diethylene glycol dialkyl ether is 0.25 to 4.5, or preferably 0.3 to 4.0.

By using the diethylene glycol alkyl ether acetate and diethylene glycol dialkyl ether in these ranges, excellent fine print reproducibility, solid fill property, and anti-mottling property, as well as superior discharge stability and resolubility of dried coating film, can be achieved, even under high-speed printing.

The diethylene glycol alkyl ether acetate is preferably a diethylene glycol monoethyl ether acetate.

The diethylene glycol dialkyl ether is preferably a diethylene glycol ethyl methyl ether and/or diethylene glycol diethyl ether

Also, to adjust the drying property and further improve the anti-mottling property, an alkylene glycol derivative having a flash point of 50 to 150°C, other than the diethylene glycol alkyl ether acetate and diethylene glycol dialkyl ether, may also be used together.

Examples of such alkylene glycol derivatives having a flash point of 50 to 150°C include: ethylene glycol diethyl ether, ethylene glycol dimethyl ether, diethylene glycol dimethyl ether, diethylene glycol diethyl ether, diethylene glycol ethyl methyl ether, diethylene glycol dibutyl ether, triethylene glycol dimethyl ether, triethylene glycol diethyl ether, tetraethylene glycol dimethyl ether, and other (poly)ethylene glycol dialkyl ethers; propylene glycol dimethyl ether, propylene glycol diethyl ether, dipropylene glycol dimethyl ether, dipropylene glycol diethyl ether, tetrapropylene glycol dimethyl ether, and other (poly)propylene glycol dialkyl ethers; propylene glycol monomethyl ether, propylene glycol monoethyl ether, propylene glycol monobutyl ether, dipropylene glycol monomethyl ether, dipropylene glycol monoethyl ether, and other (poly)propylene glycol monoalkyl ethers; propylene glycol monomethyl ether acetate, propylene glycol monoethyl ether acetate, propylene glycol monobutyl ether acetate, dipropylene glycol monomethyl ether acetate, dipropylene glycol monoethyl ether acetate, dipropylene glycol monobutyl ether acetate, and other (poly)propylene glycol monoalkyl ether monoalkyl esters; ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, triethylene glycol monomethyl ether, triethylene glycol monoethyl ether, triethylene glycol monobutyl ether, tetraethylene glycol monobutyl ether, and other (poly)ethylene glycol monoethers; ethylene glycol monomethyl acetate, ethylene glycol monoethyl acetate, ethylene glycol monobutyl acetate, diethylene glycol monomethyl acetate, triethylene glycol monomethyl acetate, and other (poly)ethylene glycol monoesters; ethylene glycol diacetate, diethylene glycol diacetate, triethylene glycol diacetate, and other (poly)ethylene glycol diesters; and ethylene glycol monomethyl ether acetate, ethylene glycol monoethyl ether acetate, ethylene glycol monobutyl ether acetate, diethylene glycol monomethyl ether acetate, diethylene glycol monoethyl ether acetate, diethylene glycol monobutyl ether acetate, diethylene glycol propyl ether acetate, triethylene glycol monobutyl ether, triethylene glycol ethyl ether acetate, triethylene glycol butyl ether acetate, and other (poly)ethylene glycol monoether monoesters, and the like.

Among the alkylene glycol derivatives having a flash point of 50 to 150°C, diethylene glycol ethyl methyl ether, diethylene glycol diethyl ether, and diethylene glycol monoethyl ether acetate are preferred.

The content of the alkylene glycol derivative having a flash point of 50 to 150°C in the nonaqueous inkjet ink composition is preferably 1.0 to 30.0 percent by mass, or more preferably 4.0 to 15.0 percent by mass.

Also used along with these organic solvents are: γ-butyrolactone, γ-valerolactone, γ-caprolactone, γ-caprylolactone, γ-laurolactone, γ-lactone, δ-valerolactone, and other δ-lactones, ε-caprolactone and other ε-lactones, and other cyclic ester compounds; and propylene carbonate and other cyclic carbonic acid ester compounds, and the like. The content of these cyclic ester compounds is 10 to 30 parts by mass, or preferably 14 to 25 parts by mass, in the nonaqueous inkjet ink composition representing 100 parts by mass. Among the aforementioned cyclic ester compounds, γ-butyrolactone and propylene carbonate are particularly preferred.

Furthermore, organic solvents other than the above may also be used, as necessary, such as: ethylene glycol, diethylene glycol, triethylene glycol, propylene glycol, ethylene glycol monomethyl acetate, propylene glycol monoacetate, and other (poly)propylene glycol monoesters; propylene glycol diacetate, dipropylene glycol diacetate, and other (poly)propylene glycol diesters; trimethyl pentane diol diisobutylate, hexyl acetate, octyl acetate, methyl lactate, ethyl lactate, butyl lactate, and other ester organic solvents.

Preferably the total quantity of organic solvents accounts for 80.0 to 98.0 percent by mass in the entire ink composition. If the total quantity exceeds 98.0 percent by mass, the printability of the obtained ink drops; a total quantity less than 80.0 percent by mass, on the other hand, induces a rise in the viscosity of the ink and consequently the discharge property of the ink from the nozzle tends to drop, which is not desirable.

### (Acrylic Resin)

Preferably the nonaqueous inkjet ink composition proposed by the present invention contains an acrylic resin. The acrylic resin may be a polymer constituted by a (meth)acrylate, or copolymer thereof, etc., that can dissolve in an organic solvent. Examples of such (meth)acrylates include: ethyl, propyl, and butyl (meth)acrylates, and other alkyl (meth)acrylates; and hydroxy methyl, hydroxy ethyl, hydroxy propyl, hydroxy butyl, and hydroxy pentyl (meth)acrylates, and other hydroxy alkyl (meth)acrylates, and the like.

Regarding these acrylic resins, preferably (1) an acrylic resin whose glass transition temperature is 90 to 110°C and mass average molecular weight is 20,000 to 40,000, and (2) an acrylic resin whose glass transition temperature is 65 to 85°C and mass average molecular weight is 50,000 to 80,000, are contained at a ratio of (1)/(2) = 70 to 90/10 to 30.

Specific examples of acrylic resins that may be used include BR-60 (Tg: 75°C), BR-64 (Tg: 55°C), BR-75 (Tg: 90°C), BR-77 (Tg: 80°C), BR-83 (Tg: 105°C), BR-87 (Tg: 105°C), BR-88 (Tg: 105°C), BR-90 (Tg: 65°C), BR-93 (Tg: 50°C), BR-95 (Tg: 80°C), BR-105 (Tg: 50°C), BR-106 (Tg: 50°C), BR-107 (Tg: 50°C), BR-108 (Tg: 90°C), BR-113 (Tg: 75°C), BR-115 (Tg: 50°C), BR-116 (Tg: 50°C), etc., manufactured by Mitsubishi Rayon.

The use quantity of acrylic resins is preferably 1.0 to 15.0 percent by mass, or more preferably 1.0 to 10.0 percent by mass, or yet more preferably 1.0 to 7.0 percent by mass, relative to the total quantity of the nonaqueous inkjet ink composition.

If the total use quantity of acrylic resins is less than 1% by mass, sufficient fixing property on the base material may not be achieved; a total use quantity exceeding 15.0% by mass, on the other hand, leads to an excessive increase in solid contents, and the discharge stability may drop as a result.

It should be noted that, to the extent that doing so does not cause reduced performance, resins other than the acrylic resins mentioned above, such as vinyl chloride resins, vinyl chloride-vinyl acetate resins, ethylene-vinyl acetate resins, styrene-acrylic resins, styrene-maleic acid resins, rosin resins, rosin ester resins, petroleum resins, coumarone indene resins, terpene phenol resins, phenol resins, urethane resins, melamine resins, urea resins, epoxy resins, cellulose resins, xylene resins, alkyd resins, aliphatic hydrocarbon resins, butyral resins, maleic acid resins, fumaric acid resins, etc., can also be used together.

### (Other Components)

Furthermore, various additives, such as surface-active agent, plasticizer, surface adjustment agent, ultraviolet protection agent, photostabilizer, antioxidant, etc., may be used, as necessary, in the nonaqueous inkjet ink composition proposed by the present invention.

### (Manufacture of Nonaqueous Inkjet Ink Composition)

Next, how these materials are used to manufacture the nonaqueous inkjet ink composition proposed by the present invention is explained.

The nonaqueous inkjet ink composition proposed by the present invention may be obtained by, for example, dispersing and mixing the ingredients using a wet circulation mill, bead mill, ball mill, sand mill, attritor, roll mill, DCP mill, agitator, Henschel mixer, colloid mill, ultrasonic homogenizer, high-pressure homogenizer (Microfluidizer, Nanomizer, Ultimizer, Genus PY, DeBEE2000, etc.), pearl mill, or other dispersion machine, and then adjusting the viscosity of the nonaqueous inkjet ink composition to a range of 2 to 10 mPa•s.

Preferably the total content of organic solvents in the nonaqueous inkjet ink composition proposed by the present invention, which is an amount obtained by subtracting, from the total quantity of ink composition, the total quantity of the binder resin, pigment, pigment dispersant, and other additives that may be used as necessary, is changed as deemed appropriate so that the viscosity of the ink falls within the aforementioned range.

The nonaqueous inkjet ink composition proposed by the present invention, thus obtained, may be used on base materials at least whose surface layer is constituted by a vinyl chloride polymer or ethylene-vinyl acetate copolymer, where the nonaqueous inkjet ink composition proposed by the present invention can be printed with an inkjet printer

### (Applications)

The nonaqueous inkjet ink composition proposed by the present invention may be used for known applications, but it is particularly suitable for use on nonabsorbent surface layers of base material. Nonabsorbent materials include metals, resins, ceramics, etc., but in terms of solid fill property, stickiness, and other factors that affect printability, etc., preferably the present invention is used on surface layers whose base material is a resin, particularly on such surface layers where the resin is a vinyl chloride polymer or ethylene-vinyl acetate copolymer.

### Examples

The present invention is explained in greater detail below by citing examples; it should be noted, however, that the present invention is not limited to these examples. Also, "%" refers to "percent by mass," while "part" refers to "part by mass," unless otherwise specified.

The materials used in the following Examples and Comparative Examples are listed below.

### <Pigment Dispersants>

SOLSPERSE 39000 (manufactured by Lubrizol)
SOLSPERSE 56000 (manufactured by Lubrizol)
PB822: AJISPER PB822 (manufactured by Ajinomoto Fine-Techno)

### <Pigments>

MA7: Carbon Black MA7 (manufactured by Mitsubishi Chemical)
D7110F: Heliogen Blue D7110F (manufactured by BASF)
G01: LEVASCREEN Yellow G01 (manufactured by LANXESS)
RGT: FASTOGEN Super Magenta RGT (manufactured by DIC)

### <Solvents>

BLO: γ-butyrolactone
DEDG: Diethylene glycol diethyl ether
EDM: Diethylene glycol ethyl methyl ether
EDGAc: Diethylene glycol monoethyl ether acetate
PC: Propylene carbonate
DPMA: Dipropylene glycol methyl ether acetate
EBAc: Ethylene glycol monobutyl ether acetate

### <Acrylic Resins>

BR-87: Dianal BR-87 (manufactured by Mitsubishi Rayon, glass transition temperature 105°C, mass average molecular weight 25,000)

### (Examples 1 to 13 and Comparative Examples 1 to 5)

### (Manufacture of Colored Base Inks)

### <Manufacture of Nonaqueous Black Base Inkjet Ink>

Ten parts of a pigment dispersant (SOLSPERSE 39000) were dissolved in 65 parts of EDM (DEDG in Example 6), into which 25 parts of a pigment (MA7) were mixed under agitation, after which the mixture was kneaded using a bead mill to obtain a nonaqueous black base inkjet ink.

### <Manufacture of Nonaqueous Cyan Base Inkjet Ink>

Ten parts of a pigment dispersant (SOLSPERSE 56000) were dissolved in 65 parts of EDM, into which 25 parts of a pigment (D7110F) were mixed under agitation, after which the mixture was kneaded using a bead mill to obtain a nonaqueous cyan base inkjet ink.

### <Manufacture of Nonaqueous Yellow Base Inkjet Ink>

Ten parts of a pigment dispersant (PB822) were dissolved in 65 parts of EDM, into which 25 parts of a pigment (G01) were mixed under agitation, after which the mixture was kneaded using a bead mill to obtain a nonaqueous yellow base inkjet ink.

### <Manufacture of Nonaqueous Magenta Base Inkjet Ink>

Ten parts of a pigment dispersant (SOLSPERSE 56000) were dissolved in 65 parts of EDM, into which 25 parts of a pigment (RGT) were mixed under agitation, after which the mixture was kneaded using a bead mill to obtain a nonaqueous magenta base inkjet ink.

### < Manufacture of Nonaqueous Inkjet Ink Composition>

The respective materials were mixed under agitation according to the recipes in Table 1 (the blending ratio of each material is expressed in percent by mass) to obtain the nonaqueous inkjet ink compositions in Examples 1 to 13 and Comparative Examples 1 to 5.

### <Printing Method and Printed Matters>

Each of the nonaqueous inkjet ink compositions in Examples 1 to 13 and Comparative Examples 1 to 5 was charged to a commercial inkjet printer, and solid printed on polyvinyl chloride sheets (product name: Kapjet Gloss Banner, manufactured by Filmolux) in a high-speed printing mode to obtain the printed matters in Examples 1 to 13 and Comparative Examples 1 to 5.

### <Evaluation>

The printed matters using the nonaqueous inkjet ink compositions in Examples 1 to 13 and Comparative Examples 1 to 5 were evaluated for the following characteristics. In the evaluations described below, A and B represent levels suitable for practical use, while C and D represent levels not suitable for use as a product.

### (Viscosity)

The nonaqueous inkjet ink compositions in Examples 1 to 13 and Comparative Examples 1 to 5 were measured for viscosity at 25°C using a viscometer (RE100L, manufactured by Toki Sangyo).

### (Fine Print Reproducibility)

Using the nonaqueous inkjet ink compositions in Examples 1 to 13 and Comparative Examples 1 to 5, polyvinyl chloride sheets (product name: Kapjet Gloss Banner, manufactured by Filmolux) were solid printed in a high-speed printing mode (360 x 720 dpi, 4 passes in one direction), and the areas of fine print were visually evaluated for level of clarity of text (bleeding or running together).

### Evaluation Criteria

A: No bleeding nor running together, and clear.
B: Bleeding and running together, but legible.
C: Bleeding and running together, and difficult to read.

### (Solid Fill Property)

Using the nonaqueous inkjet ink compositions in Examples 1 to 13 and Comparative Examples 1 to 5, polyvinyl chloride sheets (product name: Kapjet Gloss Banner, manufactured by Filmolux) were solid printed in a high-speed printing mode, and image areas were visually evaluated for solid fill property based on presence of white spots, i.e., whether solid areas were filled properly.

### Evaluation Criteria

A: There are no white spots.
B: There are some white spots.
C: There are many white spots.

### (Anti-mottling Property)

Using the nonaqueous inkjet ink compositions in Examples 1 to 13 and Comparative Examples 1 to 5, polyvinyl chloride sheets (product name: Kapjet Gloss Banner, manufactured by Filmolux) were solid printed in mixed colors (red, blue, green) in a standard mode, and image areas were visually evaluated for presence or absence of mottling (mottled images).

### Evaluation Criteria

A: There is no mottling.
B: There is some mottling.
C: There is a lot of mottling.

### (Discharge Stability)

Using the nonaqueous inkjet ink compositions in Examples 1 to 13 and Comparative Examples 1 to 5, polyvinyl chloride sheets (product name: Kapjet Gloss Banner, manufactured by Filmolux) were printed and evaluated for discharge stability based on the number of sheets on which unprinted areas were found.

### Evaluation Criteria

A: Unprinted areas are found on or after the 71st sheet, or no unprinted areas are found until the 100th sheet.
B: Unprinted areas are found on the 51st through 70th sheets.
C: Unprinted areas are found on the 31st through 50th sheets.
D: Unprinted areas are found on or before the 30th sheet.

### (Resolubility of Dried Coating Film)

The nonaqueous inkjet ink compositions in Examples 1 to 13 and Comparative Examples 1 to 5 were injected into silicone tubes of 5 mm in inner diameter and 20 cm in length and let stand for 5 days at 25°C to produce ink solids in the tubes. Next, each ink composition was again injected into the tube, and the following criteria were used to evaluate whether the solids would dissolve again, and the ink would flow out.

### Evaluation Criteria

A: The ink flows out quickly.
B: It takes time for the ink to flow out.
C: The ink flows out partially.
D: The tube remains clogged.

**[Table 1]**

| | | Examples | | | | | | | | | |
|---|---|---|---|---|---|---|---|---|---|---|---|
| | | 1 | 2 | 3 | 4 | 5 | 6 | 7 | 8 | 9 | 10 |
| | | Black | | | | | | | | | |
| Pigments | MA7 | 3.50 | 3.50 | 3.50 | 3.50 | 3.50 | 3.50 | 3.50 | 3.50 | 3.50 | 3.50 |
| | G01 | | | | | | | | | | |
| | RGT | | | | | | | | | | |
| | D7110F | | | | | | | | | | |
| Dispersants | PB822 | | | | | | | | | | |
| | SOLSPERSE 56000 | | | | | | | | | | |
| | SOLSPERSE 39000 | 1.40 | 1.40 | 1.40 | 1.40 | 1.40 | 1.40 | 1.40 | 1.40 | 1.40 | 1.40 |
| Acrylic resin | BR-87 | 6.00 | 6.00 | 6.00 | 6.00 | 6.00 | 6.00 | 6.00 | 6.00 | 6.00 | 6.00 |
| Solvents | BLO | 20.00 | 20.00 | 20.00 | 20.00 | 14.00 | 20.00 | 20.00 | 10.00 | 10.00 | 30.00 |
| | DEDG | | | | | | 24.55 | | | | |
| | EDM | 24.55 | 14.03 | 9.82 | 29.36 | 32.08 | | 19.74 | 15.82 | 29.55 | 17.05 |
| | EDGAc | 24.55 | 35.07 | 39.28 | 11.74 | 8.02 | 24.55 | 49.36 | 63.28 | 29.55 | 17.05 |
| | PC | 10.00 | 10.00 | 10.00 | 10.00 | 15.00 | 10.00 | | | 10.00 | 10.00 |
| | DPMA | 10.00 | 10.00 | 10.00 | 18.00 | 20.00 | 10.00 | | | 10.00 | 15.00 |
| Total | | 100.00 | 100.00 | 100.00 | 100.00 | 100.00 | 100.00 | 100.00 | 100.00 | 100.00 | 100.00 |
| Diethylene glycol alkyl ether acetate/diethylene glycol dialkyl ether | | 1.00 | 2.50 | 4.00 | 0.40 | 0.25 | 1.00 | 2.50 | 4.00 | 1.00 | 1.00 |
| Total of diethylene glycol alkyl ether acetate and diethylene glycol dialkyl ether (in ink composition) | | 49.1% | 49.1% | 49.1% | 41.1% | 40.1% | 49.1% | 69.1% | 79.1% | 59.1% | 34.1% |
| Viscosity (mPa•s) (25°C) | | 5.0 | 5.0 | 4.9 | 4.9 | 4.8 | 5.1 | 5.0 | 5.0 | 5.0 | 5.0 |
| Fine print reproducibility | | A | A | A | A | A | A | A | A | A | A |
| Solid fill property | | A | A | A | A | A | A | A | A | A | A |
| Anti-mottling property | | A | A | A | A | A | A | A | A | A | A |
| Discharge stability | | A | A | A | A | A | A | A | A | A | A |
| Resolubility of dried coating film | | A | A | A | A | A | A | A | A | A | A |

| | | Examples | | | Comparative Examples | | | | | | |
|---|---|---|---|---|---|---|---|---|---|---|---|
| | | 11 | 12 | 13 | 1 | | 2 | 3 | 4 | 5 | |
| | | Yellow | Magenta | Cyan | | | | Black | | | |
| Pigments | MA7 | | | | 3.50 | | 3.50 | 3.50 | 3.5 | 3.50 | |
| | G01 | 3.00 | | | | | | | | | |
| | RGT | | 3.00 | | | | | | | | |
| | D7110F | | | 3.00 | | | | | | | |
| Dispersants | PB822 | 1.20 | | | | | | | | | |
| | SOLSPERSE 56000 | | 1.20 | 1.20 | | | | | | | |
| | SOLSPERSE 39000 | | | | 1.40 | | 1.40 | 1.40 | 1.40 | 1.40 | |
| Acrylic resin | BR-87 | 5.80 | 5.80 | 6.00 | 6.00 | | 6.00 | 6.00 | 6.00 | 6.00 | |
| Solvents | BLO | 20.00 | 20.00 | 20.00 | 20.00 | | 5.00 | 20.00 | 20.00 | 20.00 | |
| | DEDG | | | | | | | | | 29.10 | |
| | EDM | 25.00 | 25.00 | 24.90 | 14.55 | | 42.05 | 8.18 | 28.42 | | |
| | EDGAc | 25.00 | 25.00 | 24.90 | 14.55 | | 42.05 | 40.92 | 5.68 | | |
| | PC | 10.00 | 10.00 | 10.00 | 20.00 | | | 10.00 | 15.00 | 10.00 | |
| | DPMA | 10.00 | 10.00 | 10.00 | 20.00 | | | 10.00 | 20.00 | 10.00 | |
| | EBAc | | | | | | | | | 20.00 | |
| Total | | 100.00 | 100.00 | 100.00 | 100.00 | | 100.00 | 100.00 | 100.00 | 100.00 | |
| Diethylene glycol alkyl ether acetate/diethylene glycol dialkyl ether | | 1.00 | 1.00 | 1.00 | 1.00 | | 1.00 | 5.00 | 0.20 | 0.00 | |
| Total of diethylene glycol alkyl ether acetate and diethylene glycol dialkyl ether (in ink composition) | | 50.0% | 50.0% | 49.8% | 29.1% | | 84.1% | 49.1% | 34.1% | 29.1% | |
| Viscosity (mPa•s) (25°C) | | 5.0 | 5.0 | 5.0 | 5.0 | | 5.0 | 5.0 | 5.0 | 5.0 | |
| Fine print reproducibility | | A | A | A | B | | B | C | A | A | |
| Solid fill property | | A | A | A | B | | A | A | B | B | |
| Anti-mottling property | | A | A | A | B | | B | C | A | B | |
| Discharge stability | | A | A | A | A | | A | A | A | A | |
| Resolubility of dried coating film | | A | A | A | A | | B | A | B | B | |

Based on the results of Examples 1 to 13 shown in Table 1, the nonaqueous inkjet ink compositions according to the constitutional makeup proposed by the present invention ensure that the viscosity of the ink composition is appropriate for inkjet printing. In addition, they provide inks that demonstrate a good balance of fine print reproducibility, solid fill property, anti-mottling property, discharge stability, and resolubility of dried coating film.

On the other hand, Comparative Example 1, characterized by a low total content of diethylene glycol alkyl ether acetate and diethylene glycol dialkyl ether being 29.1 percent by mass, led to poor fine print reproducibility, solid fill property, and anti-mottling property, while Comparative Example 2 where this total content was high, at 84.1 percent by mass, resulted in poor fine print reproducibility, anti-mottling property, and resolubility of dried coating film. Also, Comparative Example 3, characterized by a high ratio of diethylene glycol alkyl ether acetate/diethylene glycol dialkyl ether being 5.0, exhibited poor fine print reproducibility and anti-mottling property, while Comparative Example 4 where this ratio was low, at 0.2, demonstrated poor solid fill property and resolubility of dried coating film. In addition, Comparative Example 5, characterized by use of diethylene glycol diethyl ether and ethylene glycol monobutyl ether acetate as solvents, showed poor solid fill property, anti-mottling property, and resolubility of dried coating film

## Claims

1. A nonaqueous inkjet ink composition containing a pigment, a pigment dispersant, and an organic solvent, wherein:
the organic solvent contains a diethylene glycol alkyl ether acetate and a diethylene glycol dialkyl ether;
a total content of the diethylene glycol alkyl ether acetate and diethylene glycol dialkyl ether accounts for 40 to 80 parts by mass in the nonaqueous inkjet ink composition representing 100 parts by mass; and
the diethylene glycol alkyl ether acetate is compounded in relation to the diethylene glycol dialkyl ether in a manner satisfying that a ratio of diethylene glycol alkyl ether acetate/diethylene glycol dialkyl ether is 0.25 to 4.5.

2. The nonaqueous inkjet ink composition according to claim 1, wherein the diethylene glycol alkyl ether acetate is a diethylene glycol monoethyl ether acetate.

3. The nonaqueous inkjet ink composition according to claim 1 or 2, wherein the diethylene glycol dialkyl ether is a diethylene glycol ethyl methyl ether and/or diethylene glycol diethyl ether.

4. The nonaqueous inkjet ink composition according to any one of claims 1 to 3, wherein the organic solvent further contains a cyclic ester compound by 10 to 30 parts by mass in the nonaqueous inkjet ink composition representing 100 parts by mass.

5. The nonaqueous inkjet ink composition according to claim 4, wherein the cyclic ester compound is γ-butyrolactone.
